# EUROPEAN PATENT SPECIFICATION

(11) **EP 3 858 714 B1**
(45) Date of publication and mention of the grant of the patent: **28.12.2022**
(21) Application number: 20208478.6
(22) Date of filing: 18.11.2020
(51) Int. Cl.: B62D 53/06, B62D 53/08, B62D 13/02

(54) **SLIDING BOGIE LINK TRAILER WITH STEER AXLE**
SLIDING-BOGIE-GELENKANHÄNGER MIT LENKACHSE
REMORQUE À CHÂSSIS COULISSANT AVEC AXE DE DIRECTION

(30) Priority: 18.11.2019 GB 201916770
(43) Date of publication of application: 04.08.2021
(73) Proprietor: Dennison Trailers Unlimited Company, Naas, Co. Kildare (IE)
(72) Inventor: DENNISON, David, Sallins, County Kildare (IE); LAMBE, Ronan, Castledermot, County Kildare (IE); COSTELLO, Martin, Dublin 16, D16 E9P5 (IE)
(74) Representative: Schütte, Gearoid

(56) References cited:
- EP-A1- 0 162 552
- EP-A2- 1 847 448
- EP-A2- 2 165 918
- GB-A- 2 396 141

## Description

### Introduction

This invention relates to sliding bogie link trailers with one or more steer axles.

The invention is particularly concerned with a sliding bogie link trailer of the type having a front trailer part and a rear trailer part which are slidably interconnected, the front trailer part having a kingpin for connection to a fifth wheel of a tractor vehicle for towing the trailer, the rear trailer part having an axle with ground-engaging wheels and a fifth wheel being mounted at a rear end of the rear trailer part for towing another trailer, the axle on the rear trailer part being a steer axle and having an associated steering system on the trailer which is operable to steer the wheels on the axle.

EP 1 847 448 A2 discloses a sliding bogie link trailer having a front trailer part and a rear trailer part which are slidably interconnected, the front trailer part comprising a kingpin for connection to a fifth wheel of a tractor vehicle for towing the trailer, wherein the rear trailer part comprises an axle with ground-engaging wheels, the axle on the rear trailer part being a steerable axle and further comprising an associated steering system on the trailer which is operable to steer the wheels on the axle.

The present invention is directed towards providing an improved trailer of this type.

### Summary of the Invention

According to the invention there is provided a sliding bogie link trailer having a front trailer part and a rear trailer part which are slidably interconnected, the front trailer part having a kingpin for connection to a fifth wheel of a tractor vehicle for towing the trailer, the rear trailer part having an axle with ground-engaging wheels and a fifth wheel being mounted at a rear end of the rear trailer part for towing another trailer, the axle on the rear trailer part being a steer axle and having an associated steering system on the trailer which is operable to steer the wheels on the axle, the steering system including sensing means to sense when the rear trailer part is in a fully open position on the front trailer part, the steering system being operable to lock the wheels at a zero steer angle when the rear trailer part is not in the fully open position.

In another embodiment the steering system is an electro-hydraulic steering system.

In another embodiment two sensors are provided comprising a first sensor to indicate if the rear trailer is in the fully open position and a second sensor operable to reboot a controller of the electro-hydraulic steering system, when the rear trailer part moves between open and closed positions on the front trailer part.

In a further embodiment, the sensing means comprises the two sensors mounted on the rear trailer part and an associated trigger arm mounted on the front trailer part, the trigger arm aligning with the sensors when the rear trailer part is in the fully open position.

In another embodiment the two trailer parts are slidably interconnected by means of rollers.

In another embodiment the rear trailer part has a chassis comprising a pair of spaced-apart longitudinal I-beams, and rear rollers mounted at a rear end of the front trailer part roll along a track formed along an upper face of a lower flange of each I-beam on the rear trailer part.

In another embodiment each rear roller comprises a removable rear roller assembly demountably attached to the front trailer part.

In another embodiment the front trailer part has a chassis comprising a pair of spaced-apart longitudinal I-beams interconnected by cross members and each rear roller assembly is bolted to an inside face of an upright web of an I-beam.

In another embodiment there is provided a locking system for locking the trailer parts in the fully open position and in a fully closed position.

In another embodiment the locking system comprises at least one locking bolt slidably mounted on one trailer part for movement between a retracted disengaged position and an extended engaged position for engagement with associated spaced-apart receiver slots on the other trailer part corresponding to the fully open position and the fully closed position.

In another embodiment each locking bolt is manually slidable between the retracted disengaged position and the extended engaged position.

In another embodiment an actuator is provided for movement of each locking bolt between the retracted disengaged position and the extended engaged position.

In another embodiment the actuator comprises a mechanism which is operable for reciprocating movement of the locking bolt. Various actuator mechanisms are possible which apply a translational movement to the locking bolt for movement between the disengaged position and the engaged position, such as a pneumatic or hydraulic ram or similar mechanism, a screw type mechanism or a cam operated mechanism for example.

In another embodiment a pair of locking bolts are mounted transversely in parallel on the rear trailer part for movement by pneumatic rams between the retracted disengaged position and the extended engaged position for engagement with complementary receivers on the front trailer part.

In another embodiment two steer axles are mounted on the rear trailer part.

In another embodiment three axles are mounted on the rear trailer part comprising a front fixed axle, an intermediate steer axle and a rear steer axle.

### Brief Description of the Drawings

The invention will be more clearly understood by the following description of some embodiments thereof, given by way of example only, with reference to the accompanying drawings, in which:
Fig. 1 is a plan view of a sliding bogie link trailer according to the invention;
Fig. 2 is another plan view of the sliding bogie link trailer, shown in another position of use;
Fig. 3 is a detail perspective view showing a sliding bogie portion of the link trailer;

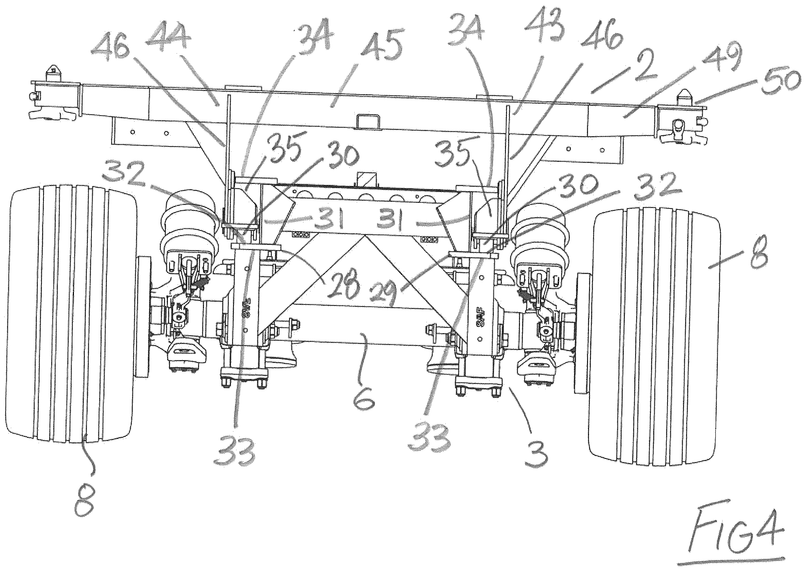

Fig. 4 is an enlarged detail elevational view showing portion of the sliding bogie link trailer;
Fig. 5 is a detail elevational view showing a sensing means portion of the sliding bogie link trailer;
Fig. 6 is a detail sectional view taken along the line VI-VI of Fig. 5 showing the sensing means portion of the sliding bogie link trailer;
Fig. 7 is a detail plan view showing a locking portion of the sliding bogie link trailer;
Fig. 8 is a perspective view of the locking portion shown in Fig. 7;
Fig. 9 is an exploded elevational view of the sliding bogie link trailer;
Fig. 10 is an elevational view of the sliding bogie link trailer, shown in an open position;
Fig. 11 is an elevational view of the sliding bogie link trailer, shown in a closed position;
Fig. 12 is a detail elevational view showing portion of the sliding bogie link trailer;
Fig. 13 is a detail perspective view of portion of the sliding bogie link trailer;
Fig. 14 is a detail perspective view similar to that shown in Fig. 13, showing a step portion of the trailer in another position of use;
Fig. 15 is a detail perspective view of the step portion;
Fig. 16 is an elevational view of another sliding bogie link trailer according to a second embodiment of the invention, shown in an open position; and
Fig. 17 is an elevational view of the sliding bogie link trailer of Fig. 16, shown in a closed position.

### Detailed Description of the Preferred Embodiments

Referring to the drawings, there is shown a sliding bogie link trailer according to the invention, indicated generally by the reference numeral 1. The trailer 1 has a front trailer part 2 and an associated rear trailer part 3 which are slidably interconnected.

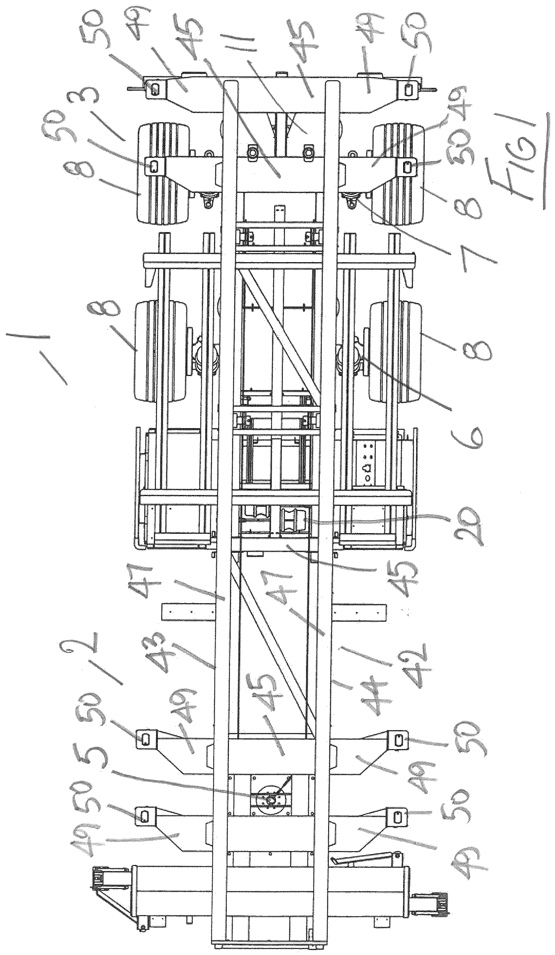

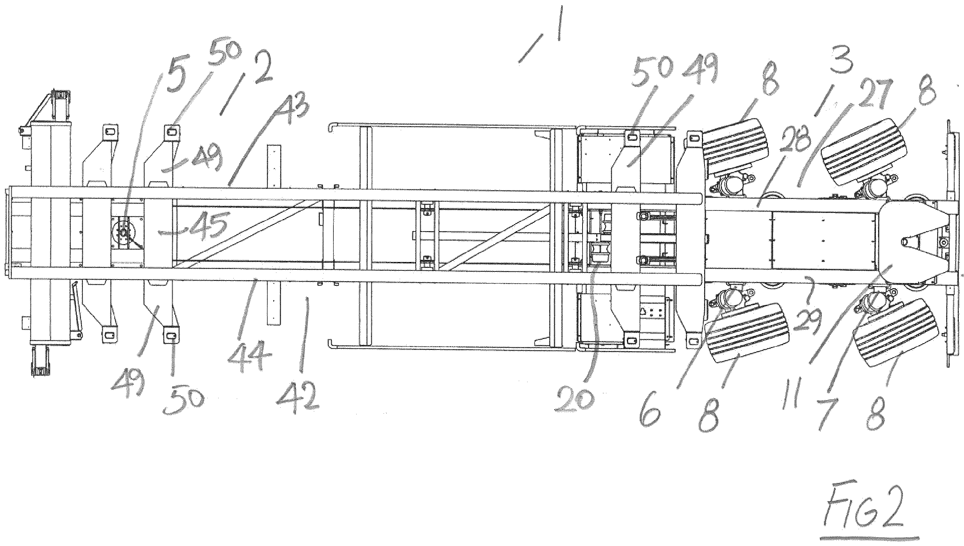

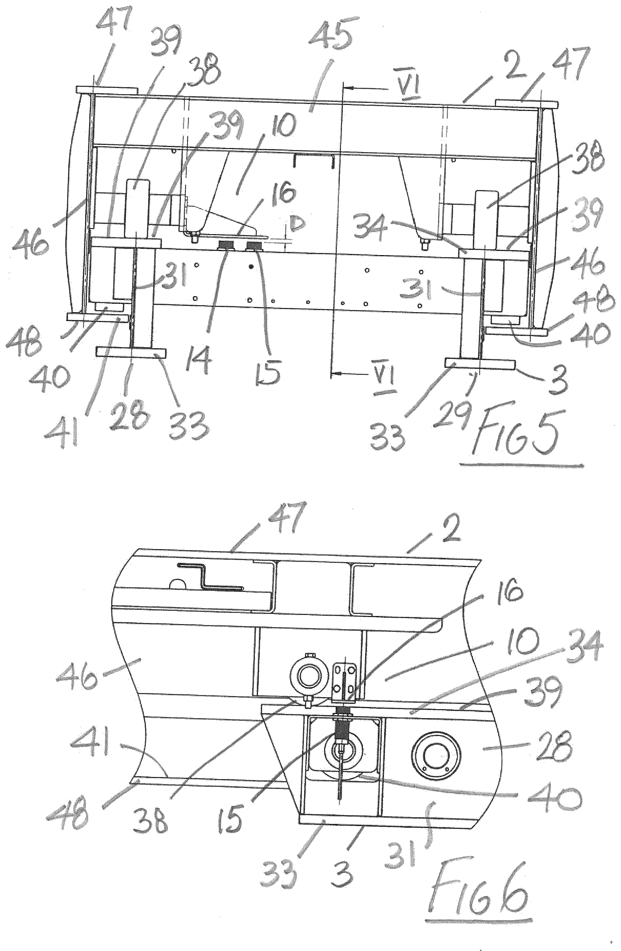

The rear trailer part 3 forms a sliding bogie which is slidably mounted at a rear end of the front trailer part 2. The front trailer part 2 has a kingpin 5 for connection to a fifth wheel of a tractor vehicle (not shown) for towing the trailer 1. The rear trailer part 3 has a pair of longitudinally spaced-apart axles 6, 7, each carrying a pair of ground-engaging road wheels 8. In this case, both axles 6, 7 on the rear trailer part 3 are steer axles having an associated steering system on the trailer 1 which is operable to steer the wheels 8 on each axle 6, 7. In accordance with the present invention, sensing means 10 (Fig. 5 and Fig. 6) is provided on the trailer 1 to sense when the rear trailer part 3 is in a fully open position (as shown in Fig. 2) on the front trailer part 2. The steering system is operable to lock the wheels 8 at a zero steer angle when the rear trailer part 3 is not in the fully open position, that is, when it is in a partially closed position or a fully closed position, as shown in Fig. 1. A fifth wheel 11 is mounted at a rear end of the rear trailer part 3 for towing another trailer behind the sliding bogie link trailer 1.

Preferably, the steering system is an electro-hydraulic steering system. A number of electro-hydraulic steer systems are well known, such as the systems produced by the Dutch company VSE Trailer Systems BV (part of the Weber-Hydraulik Group), and will be familiar to those skilled in the art. The VSE steering system is an electronic steering system which provides computer controlled electro-hydraulic steering. Essentially, a track rod cylinder is mounted on each steer axle 6, 7 and is operable to swivel the wheels 8 on the axle 6, 7. A sensor associated with the kingpin 5 measures the yaw angle between the tractor and the trailer 1 and this is converted into a signal which is used to control operation of the track rod cylinder on each steer axle 6, 7. The VSE steering system locks the wheels 8 on the axles 6, 7 in the straight ahead position at a predetermined speed for stability.

The sensing means 10 comprises a pair of sensors 14, 15 which are mounted on one trailer part 2, 3 and a cooperating trigger arm 16 mounted on the other trailer part 2, 3. In this case the sensors 14, 15 are mounted on the rear trailer part 3 and the arm 16 is mounted on the front trailer part 2. However, it will be appreciated that in an alternative arrangement the sensors 14, 15 could be mounted on the front trailer part 2 and the arm 16 mounted on the rear trailer part. The sensors 14, 15 may conveniently comprise proximity switches. The clearance distance D (Fig. 5) between the sensors 14, 15 and the arm 16 when in alignment is in the range 5mm to 10mm.

The trigger arm 16 aligns with the sensors 14, 15, as shown in Fig. 6, when the rear trailer part 3 is in the fully open position shown in Fig. 2. A first sensor 14 indicates if the rear trailer part 3 is in the fully open position and communicates this to a controller of the electro-hydraulic steering system. A second sensor 15 is also connected to the controller of the electro-hydraulic steering system and is operable to reboot the controller of the electro-hydraulic steering system when the rear trailer part 3 moves between open and closed positions on the front trailer part 2. It is envisaged that in some cases a single sensor 14, 15 may be provided. The controller of the electro-hydraulic steering system is adapted to automatically lock the wheels 8 at a zero steer angle when the rear trailer part 3 is not in the fully open position and allow normal steering of the wheels 8 when the rear trailer part 3 is in the fully open position. No manual intervention is required to activate or de-activate the steer system as with conventional steer systems.

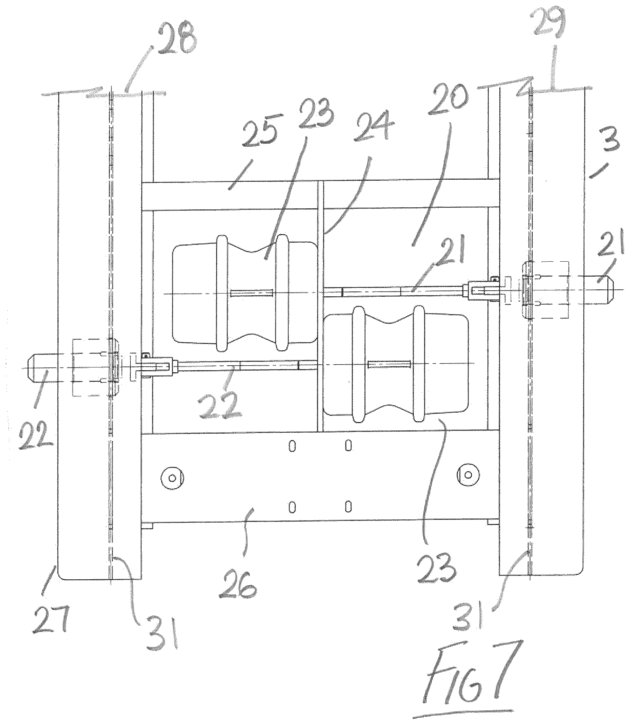

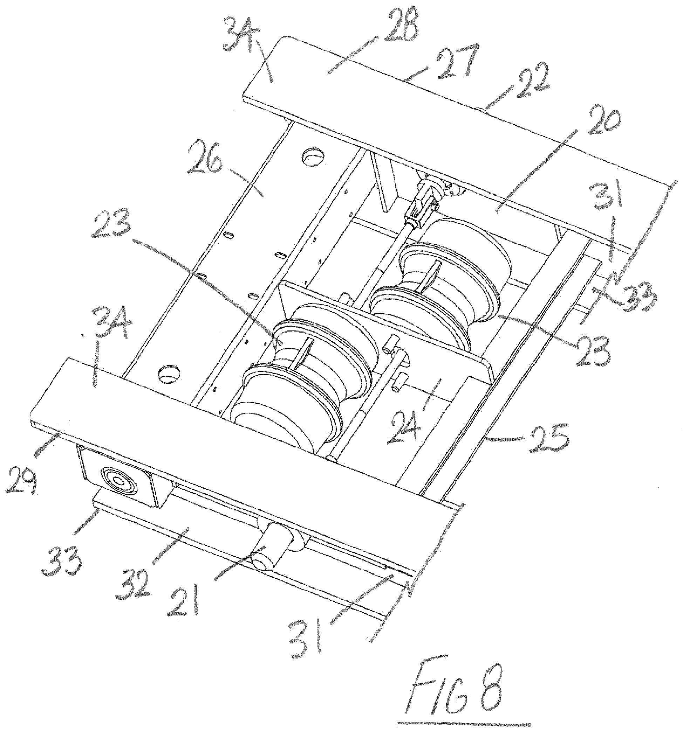

Referring in particular to Fig. 7 and Fig. 8, a locking system 20 for locking the rear trailer part 3 on the front trailer part 2 in either a fully open or a fully closed position is shown. The locking system 20 comprises a pair of pneumatic ram 23 operated locking bolts 21, 22 mounted transversely in parallel on the rear trailer part 3 for movement between a retracted release position and an extended engaged position for engagement with complementary receivers on the front trailer part 2. Each pneumatic ram 23 comprises a standard 24/30 anchorlok brake chamber. The pneumatic rams 23 are mounted on opposite sides of a central plate 24 extending longitudinally between spaced-apart cross members 25,26 on a chassis 27 of the rear trailer part 3.

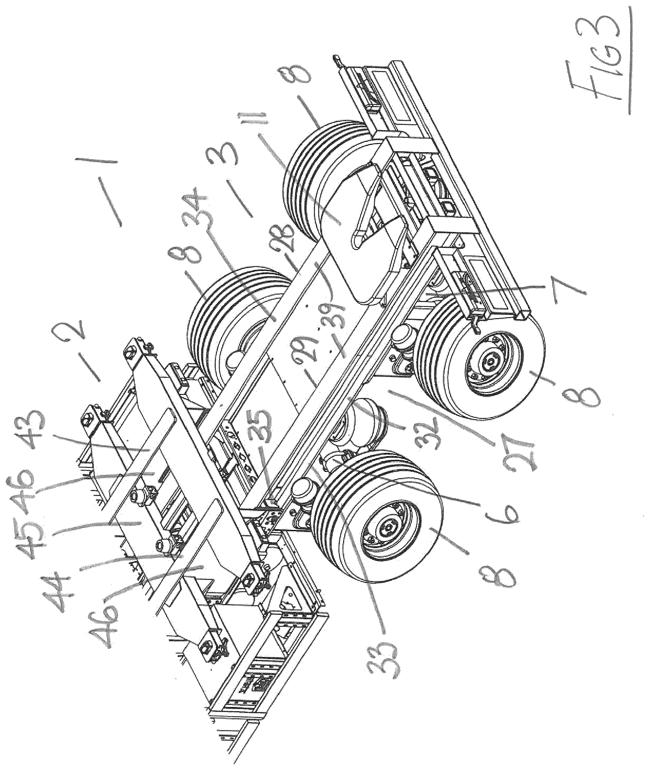

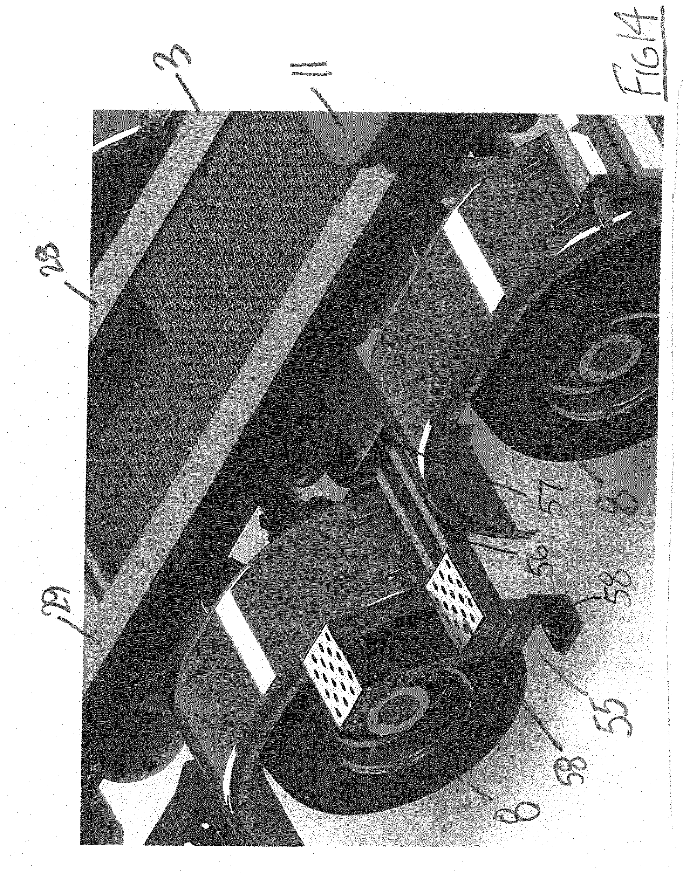

Referring in particular to Figs. 1 to 3 and 9 to 14, the rear trailer part 3 has a chassis 27 comprising a pair of spaced-apart longitudinal I-beams 28, 29 having an upright web 31 with a lower flange 33 and an upper flange 34. Rear rollers 30 are mounted at a rear end of the front trailer part 2 which roll along a track formed along an upper face 32 of the lower flange 33 of each I-beam 28, 29 on the rear trailer part 3 outside the web 31.

Each rear roller 30 comprises a removable rear roller assembly 35 which is bolted onto the front trailer part 2 at a rear end of the front trailer part 2. Thus each rear roller assembly 35 is removably mounted on the front trailer part 2. This advantageously facilitates manufacture of the trailer 1 and assembly of the trailer parts 2, 3 together. It also allows the two trailer parts 2, 3 to be subsequently split apart for servicing, if required, by removal of the roller assemblies 35.

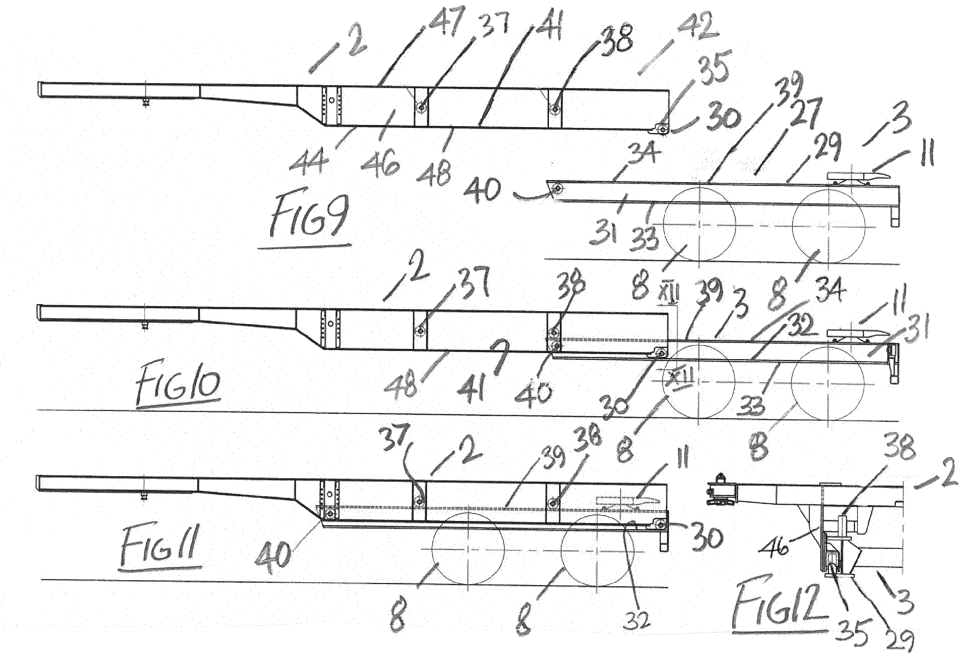

Referring in particular to Fig. 1 and Fig. 9, the front trailer part 2 has a skeletal chassis 42 comprising a pair of spaced-apart longitudinal I-beams 43, 44 interconnected by a plurality of spaced-apart cross members 45. Each I-beam 43, 44 has a vertical web 46 with a top flange 47 and a bottom flange 48. Bolsters 49, with twistlocks 50 for engagement with container boxes carried on the front trailer part 2 in use, project laterally outwardly of the longitudinal I-beams 43, 44.

The two trailer parts 2, 3 slidably interconnect by means of rollers for smooth movement of the trailer parts 2, 3 between the fully closed position shown in Fig. 1 and the fully open position shown in Fig. 2. Forward rollers 37 and intermediate rollers 38 on the front trailer part 2 run along a top 39 of each I-beam 28, 29 of the rear trailer part 3. Rollers 40 at a front end of each I-beam 28, 29 of the rear trailer part 3 roll along upper faces 41 of the bottom flanges 48 of the longitudinal I-beams 43, 44 inside the webs 46 of the I-beams 43, 44 forming the chassis 42 of the front trailer part 2.

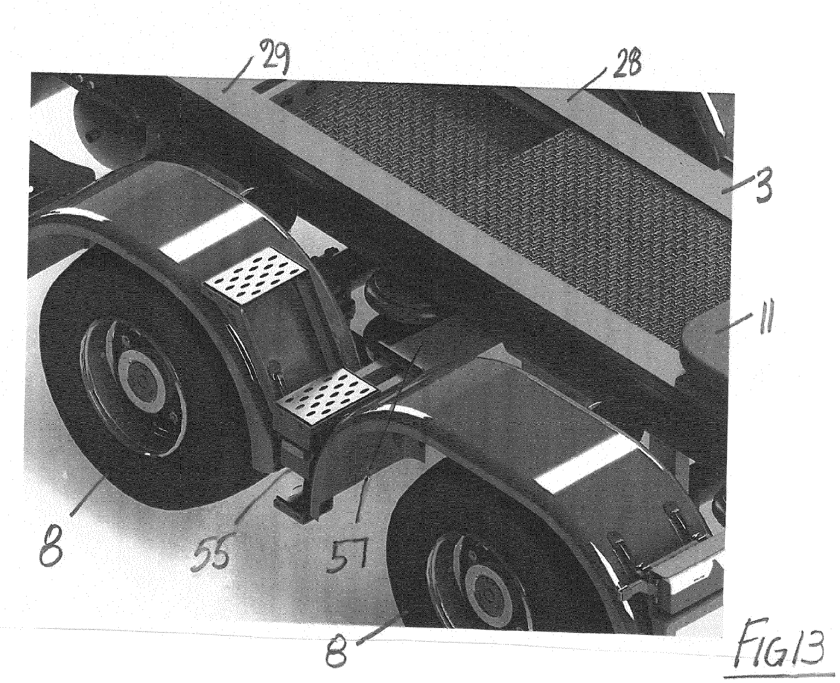

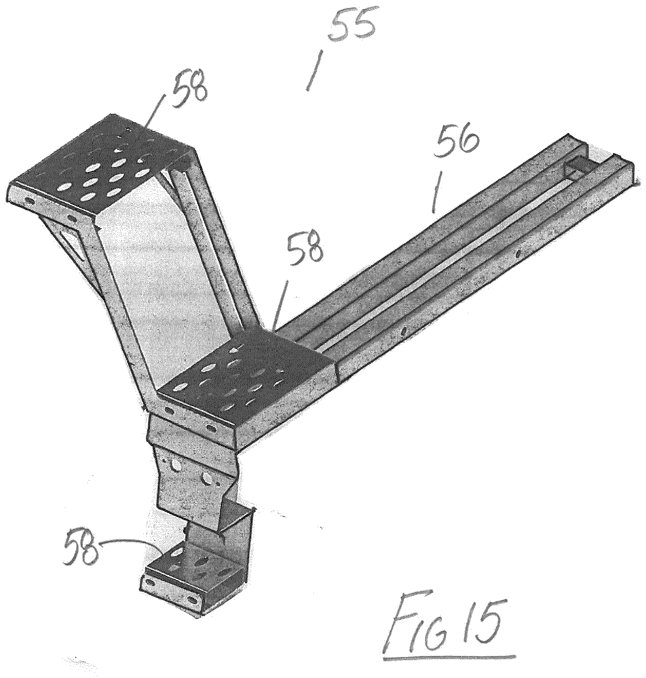

Referring now to Figs. 13 to 15, a step assembly 55 is shown mounted between the axles 6, 7. The step assembly 55 is telescopically mounted on the rear trailer part 3 for movement between an inward position housed between the wheels 8 and an outward position projecting outwardly at a side of the trailer 1 to provide access to the coupling area when another trailer is coupled to the fifth wheel 11 on the rear trailer part 3. The step assembly 55 has a slide arm 56 which is telescopically slidable within a complementary slide box 57 on the rear trailer part 3. A number of steps 58 are provided at an outer end of the slide arm 56.

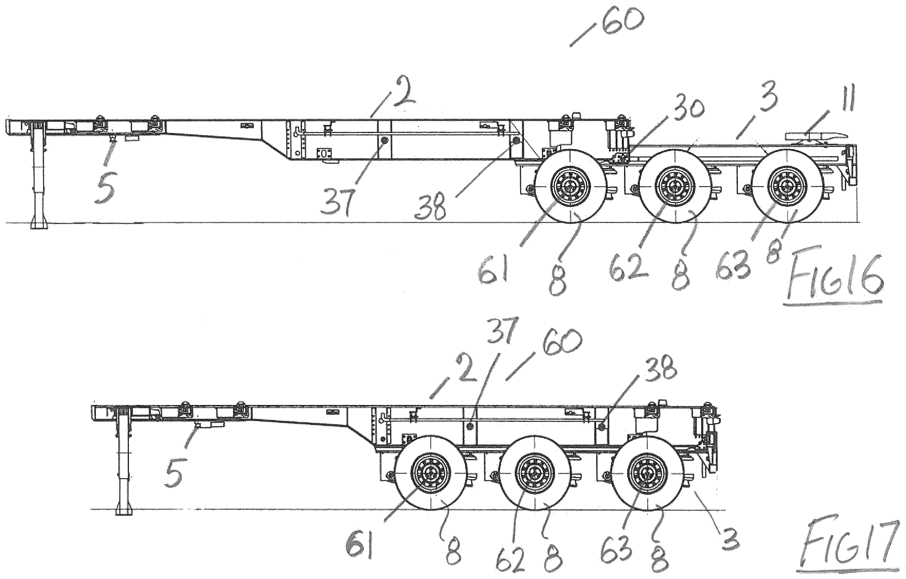

Referring now to Fig. 16 and Fig. 17, there is shown another sliding bogie link trailer according to a second embodiment of the invention, indicated generally by the reference numeral 60. Parts similar to those described previously are assigned the same reference numerals. In this case, the rear trailer part 3 has three axles, namely, a front fixed axle 61, an intermediate steer axle 62, and a rear steer axle 63.

The terms "comprise" and "include", and any variations thereof required for grammatical reasons, are to be considered as interchangeable and accorded the widest possible interpretation.

The invention is not limited to the embodiments hereinbefore described but may be varied in both construction and detail within the scope of the appending claims.

## Claims

1. A sliding bogie link trailer (1) having a front trailer part (2) and a rear trailer part (3) which are slidably interconnected, the front trailer part (2) having a kingpin (5) for connection to a fifth wheel of a tractor vehicle for towing the trailer (1), the rear trailer part (3) having an axle (6, 7) with ground-engaging wheels (8) and a fifth wheel (11) being mounted at a rear end of the rear trailer part (3) for towing another trailer, the axle (6, 7) on the rear trailer part (3) being a steerable axle and having an associated steering system on the trailer (1) which is operable to steer the wheels (8) on the axle (6, 7), the steering system including sensing means (10) to sense when the rear trailer part (3) is in a fully open position on the front trailer part (2), the steering system being operable to lock the wheels (8) at a zero steer angle when the rear trailer part (3) is not in the fully open position.

2. The trailer (1) as claimed in claim 1, wherein the steering system is an electro-hydraulic steering system.

3. The trailer (1) as claimed in claim 2, wherein two sensors (14, 15) are provided comprising a first sensor (14) to indicate if the rear trailer part (3) is in the fully open position and a second sensor (15) operable to reboot a controller of the electro-hydraulic steering system when the rear trailer part (3) moves between open and closed positions on the front trailer part (2).

4. The trailer (1) as claimed in claim 3, wherein the sensing means (10) comprises the two sensors (14, 15) mounted on the rear trailer part (3) and an associated trigger arm (16) mounted on the front trailer part (2), the trigger arm (16) aligning with the sensors (14, 15) when the rear trailer part (3) is in the fully open position.

5. The trailer (1) as claimed in any preceding claim, wherein the two trailer parts (2, 3) are slidably interconnected by means of rollers (30, 37, 38, 40).

6. The trailer (1) as claimed in claim 5, wherein the rear trailer part (3) has a chassis (27) comprising a pair of spaced-apart longitudinal I-beams (28, 29), and rear rollers (30) mounted at a rear end of the front trailer part (2) roll along a track formed along an upper face (32) of a lower flange (33) of each I-beam (28, 29) on the rear trailer part (3).

7. The trailer (1) as claimed in claim 5, wherein each rear roller (30) comprises a removable rear roller assembly (35) demountably attached to the front trailer part (2).

8. The trailer (1) as claimed in claim 7, wherein the front trailer part (2) has a chassis (42) comprising a pair of spaced-apart longitudinal I-beams (43, 44) interconnected by cross members (45) and each rear roller assembly (35) is bolted to an inside face of an upright web of an I-beam (43, 44).

9. The trailer as claimed in any one of the preceding claims, further comprising a locking system (20) for locking the trailer parts (2, 3) in the fully open position and in a fully closed position.

10. The trailer (1) as claimed in claim 9 wherein the locking system (20) comprises at least one locking bolt (21, 22) slidably mounted on one trailer part (2, 3) for movement between a retracted disengaged position and an extended engaged position for engagement with associated spaced-apart receiver slots on the other trailer part (2, 3) corresponding to the fully open position and the fully closed position.

11. The trailer (1) as claimed in claim 10 wherein each locking bolt (21, 22) is manually slidable between the retracted disengaged position and the extended engaged position.

12. The trailer (1) as claimed in claim 10 wherein an actuator (23) is provided for movement of each locking bolt (21, 22) between the retracted disengaged position and the extended engaged position.

13. The trailer (1) as claimed in claim 12, wherein the actuator (23) comprises a mechanism which is operable for reciprocating movement of the locking bolt (21, 22).

14. The trailer (1) as claimed in claim 12 or claim 13, wherein a pair of locking bolts (21, 22) are mounted transversely in parallel on the rear trailer part (3) for movement by pneumatic rams (23) between the retracted disengaged position and the extended engaged position for engagement with complementary receivers on the front trailer part (2).

15. The trailer (1) as claimed in any one of the preceding claims, wherein two steer axles (6, 7) are mounted on the rear trailer part (3).

16. The trailer (60) as clamed in any one of claims 1 to 14, wherein three axles are mounted on the rear trailer part (3) comprising a front fixed axle (61), an intermediate steer axle (62) and a rear steer axle (63).

## Patentansprüche

1. Verknüpfungsanhänger (1) mit verschiebbarem Drehgestell, der einen vorderen Anhängerteil (2) und einen hinteren Anhängerteil (3) aufweist, die verschiebbar miteinander verbunden sind, wobei der vordere Anhängerteil (2) einen Achsschenkelbolzen (5) für eine Verbindung mit einer Sattelkupplung eines Zugfahrzeugs zum Ziehen des Anhängers (1) aufweist, wobei der hintere Anhängerteil (3) eine Achse (6, 7) mit in den Boden eingreifenden Rädern (8) und eine Sattelkupplung (11) aufweist, die zum Ziehen eines anderen Anhängers an einem hinteren Ende des hinteren Anhängerteils (3) angebracht ist, wobei die Achse (6, 7) an dem hinteren Anhängerteil (3) eine lenkbare Achse ist und ein zugehöriges Lenksystem an dem Anhänger (1) aufweist, das betriebsfähig ist, um die Räder (8) an der Achse (6, 7) zu lenken, das Lenksystem einschließlich eines Erfassungsmittels (10), um zu erfassen, wenn der hintere Anhängerteil (3) in einer vollständig geöffneten Position an dem vorderen Anhängerteil (2) ist, wobei das Lenksystem betriebsfähig ist, um die Räder (8) in einem Nulllenkwinkel zu verriegeln, wenn der hintere Anhängerteil (3) nicht in der vollständig geöffneten Position ist.

2. Anhänger (1) nach Anspruch 1, wobei das Lenksystem ein elektrohydraulisches Lenksystem ist.

3. Anhänger (1) nach Anspruch 2, wobei zwei Sensoren (14, 15) bereitgestellt sind, umfassend einen ersten Sensor (14), um anzugeben, ob der hintere Anhängerteil (3) in der vollständig geöffneten Position ist, und einen zweiten Sensor (15), der betriebsfähig ist, um eine Steuervorrichtung des elektrohydraulischen Lenksystems neu zu starten, wenn sich der hintere Anhängerteil (3) zwischen einer geöffneten und einer geschlossenen Position an dem vorderen Anhängerteil (2) bewegt.

4. Anhänger (1) nach Anspruch 3, wobei das Erfassungsmittel (10) die zwei Sensoren (14, 15), die an dem hinteren Anhängerteil (3) angebracht sind, und einen zugehörigen Auslösearm (16) umfasst, der an dem vorderen Anhängerteil (2) angebracht ist, wobei der Auslösearm (16) an den Sensoren (14, 15) ausgerichtet ist, wenn der hintere Anhängerteil (3) in der vollständig geöffneten Position ist.

5. Anhänger (1) nach einem der vorstehenden Ansprüche, wobei die zwei Anhängerteile (2, 3) mittels Rollen (30, 37, 38, 40) verschiebbar miteinander verbunden sind.

6. Anhänger (1) nach Anspruch 5, wobei der hintere Anhängerteil (3) ein Fahrgestell (27) aufweist, umfassend ein Paar von beabstandeten längslaufenden I-Trägern (28, 29), und hintere Rollen (30), die an einem hinteren Ende des vorderen Anhängerteils (2) angebracht sind, entlang einer Bahn rollen, die entlang einer oberen Fläche (32) eines unteren Flansches (33) jedes I-Trägers (28, 29) an dem hinteren Anhängerteil (3) ausgebildet ist.

7. Anhänger (1) nach Anspruch 5, wobei jede hintere Rolle (30) eine entfernbare hintere Rollenanordnung (35) umfasst, die an dem vorderen Anhängerteil (2) abnehmbar befestigt ist.

8. Anhänger (1) nach Anspruch 7, wobei der vordere Anhängerteil (2) ein Fahrgestell (42) aufweist, umfassend ein Paar von beabstandeten längslaufenden I-Trägern (43, 44), die durch Querversteifungen (45) miteinander verbunden sind, und jede hintere Rollenanordnung (35) mit einer Innenfläche eines aufrechten Stegs eines I-Trägers (43, 44) verbolzt ist.

9. Anhänger nach einem der vorstehenden Ansprüche, ferner umfassend ein Verriegelungssystem (20) zum Verriegeln der Anhängerteile (2, 3) in der vollständig geöffneten Position und in einer vollständig geschlossenen Position.

10. Anhänger (1) nach Anspruch 9, wobei das Verriegelungssystem (20) mindestens einen Verriegelungsbolzen (21, 22) umfasst, der an einem Anhängerteil (2, 3) für eine Bewegung zwischen einer eingefahrenen Außereingriffsposition und einer ausgefahrenen Eingriffsposition zum Eingriff mit zugehörigen beabstandeten Aufnahmeschlitzen an dem anderen Anhängerteil (2, 3) entsprechend der vollständig geöffneten Position und der vollständig geschlossenen Position verschiebbar angebracht ist.

11. Anhänger (1) nach Anspruch 10, wobei jeder Verriegelungsbolzen (21, 22) zwischen der eingefahrenen Nichteingriffsposition und der ausgefahrenen Eingriffsposition manuell verschiebbar ist.

12. Anhänger (1) nach Anspruch 10, wobei ein Aktuator (23) für die Bewegung jedes Verriegelungsbolzens (21, 22) zwischen der eingefahrenen Nichteingriffsposition und der ausgefahrenen Eingriffsposition bereitgestellt ist.

13. Anhänger (1) nach Anspruch 12, wobei der Aktuator (23) einen Mechanismus umfasst, der für eine Hin- und Herbewegung des Verriegelungsbolzens (21, 22) betriebsfähig ist.

14. Anhänger (1) nach Anspruch 12 oder Anspruch 13, wobei ein Paar von Verriegelungsbolzen (21, 22) an dem hinteren Anhängerteil (3) für die Bewegung durch pneumatische Kolben (23) zwischen der eingefahrenen Außereingriffsposition und der ausgefahrenen Eingriffsposition zum Eingriff mit komplementären Aufnahmen an dem vorderen Anhängerteil (2) quer parallel angebracht sind.

15. Anhänger (1) nach einem der vorstehenden Ansprüche, wobei zwei Lenkachsen (6, 7) an dem hinteren Anhängerteil (3) angebracht sind.

16. Anhänger (60) nach einem der Ansprüche 1 bis 14, wobei drei Achsen an dem hinteren Anhängerteil (3) angebracht sind, umfassend eine vordere festgelagerte Achse (61), eine Zwischenlenkachse (62) und eine hintere Lenkachse (63).

## Revendications

1. Remorque (1) à raccord à bogie coulissant ayant une partie de remorque avant (2) et une partie de remorque arrière (3) qui sont reliées entre elles de manière coulissante, la partie de remorque avant (2) ayant un pivot d'attelage (5) pour la liaison à une sellette d'attelage d'un véhicule tracteur pour le tractage de la remorque (1), la partie de remorque arrière (3) ayant un essieu (6, 7) avec des roues en contact avec le sol (8) et une sellette d'attelage (11) étant montée au niveau d'une extrémité arrière de la partie de remorque arrière (3) pour le tractage d'une autre remorque, l'essieu (6, 7) sur la partie de remorque arrière (3) étant un essieu dirigé et ayant un système de direction associé sur la remorque (1) qui peut fonctionner pour diriger les roues (8) sur l'essieu (6, 7), le système de direction comportant des moyens de détection (10) pour détecter le moment où la partie de remorque arrière (3) est dans une position entièrement ouverte sur la partie de remorque avant (2), le système de direction pouvant fonctionner pour verrouiller les roues (8) à un angle de braquage nul lorsque la partie de remorque arrière (3) n'est pas dans la position entièrement ouverte.

2. Remorque (1) selon la revendication 1, dans laquelle le système de direction est un système de direction électro-hydraulique.

3. Remorque (1) selon la revendication 2, dans laquelle deux capteurs (14, 15) sont prévus comprenant un premier capteur (14) pour indiquer si la partie de remorque arrière (3) est dans la position entièrement ouverte et un second capteur (15) pouvant fonctionner pour redémarrer un dispositif de commande du système de direction électro-hydraulique lorsque la partie de remorque arrière (3) se déplace entre des positions ouverte et fermée sur la partie de remorque avant (2).

4. Remorque (1) selon la revendication 3, dans laquelle les moyens de détection (10) comprennent les deux capteurs (14, 15) montés sur la partie de remorque arrière (3) et un bras de déclenchement (16) associé monté sur la partie de remorque avant (2), le bras de déclenchement (16) s'alignant avec les capteurs (14, 15) lorsque la partie de remorque arrière (3) est dans la position entièrement ouverte.

5. Remorque (1) selon l'une quelconque des revendications précédentes, dans laquelle les deux parties de remorque (2, 3) sont reliées entre elles de manière coulissante au moyen de rouleaux (30, 37, 38, 40).

6. Remorque (1) selon la revendication 5, dans laquelle la partie de remorque arrière (3) a un châssis (27) comprenant une paire de poutres en I (28, 29) longitudinales espacées et des rouleaux arrière (30) montés au niveau d'une extrémité arrière de la partie de remorque avant (2) roulent le long d'une voie formée le long d'une face supérieure (32) d'une membrure inférieure (33) de chaque poutre en I (28, 29) sur la partie de remorque arrière (3).

7. Remorque (1) selon la revendication 5, dans laquelle chaque rouleau arrière (30) comprend un ensemble rouleau arrière (35) amovible fixé de manière à pouvoir être démonté à la partie de remorque avant (2).

8. Remorque (1) selon la revendication 7, dans laquelle la partie de remorque avant (2) a un châssis (42) comprenant une paire de poutres en I (43, 44) longitudinales espacées reliées entre elles par des traverses (45) et chaque ensemble rouleau arrière (35) est boulonné sur une face intérieure d'une âme verticale d'une poutre en I (43, 44).

9. Remorque selon l'une quelconque des revendications précédentes, comprenant en outre un système de verrouillage (20) pour le verrouillage des parties de remorque (2, 3) dans la position entièrement ouverte et dans une position entièrement fermée.

10. Remorque (1) selon la revendication 9, dans laquelle le système de verrouillage (20) comprend au moins un boulon de verrouillage (21, 22) monté de manière coulissante sur une partie de remorque (2, 3) pour un mouvement entre une position désolidarisée rétractée et une position mise en prise étendue pour une mise en prise avec des fentes réceptrices espacées associées sur l'autre partie de remorque (2, 3) correspondant à la position entièrement ouverte et à la position entièrement fermée.

11. Remorque (1) selon la revendication 10, dans laquelle chaque boulon de verrouillage (21, 22) peut coulisser manuellement entre la position désolidarisée rétractée et la position mise en prise étendue.

12. Remorque (1) selon la revendication 10, dans laquelle un actionneur (23) est prévu pour le mouvement de chaque boulon de verrouillage (21, 22) entre la position désolidarisée rétractée et la position mise en prise étendue.

13. Remorque (1) selon la revendication 12, dans laquelle l'actionneur (23) comprend un mécanisme qui peut fonctionner pour un mouvement alternatif du boulon de verrouillage (21, 22).

14. Remorque (1) selon la revendication 12 ou la revendication 13, dans laquelle une paire de boulons de verrouillage (21, 22) sont montés transversalement en parallèle sur la partie de remorque arrière (3) pour un mouvement par des vérins pneumatiques (23) entre la position désolidarisée rétractée et la position mise en prise étendue pour la mise en prise avec des récepteurs complémentaires sur la partie de remorque avant (2).

15. Remorque (1) selon l'une quelconque des revendications précédentes, dans laquelle deux essieux directeurs (6, 7) sont montés sur la partie de remorque arrière (3).

16. Remorque (60) selon l'une quelconque des revendications 1 à 14, dans laquelle trois essieux sont montés sur la partie de remorque arrière (3) comprenant un essieu fixe avant (61), un essieu directeur intermédiaire (62) et un essieu directeur arrière (63).
